# EUROPÄISCHE PATENTSCHRIFT

(11) **EP 3 489 246 B1**
(45) Veröffentlichungstag und Bekanntmachung des Hinweises auf die Patenterteilung: **26.02.2020**
(21) Anmeldenummer: 18206629.0
(22) Anmeldetag: 16.11.2018
(51) Int. Cl.: C07F 7/18, C08K 3/36, C08K 5/548, C08L 21/02, C08L 9/00, C08L 9/06

(54) **SILANMISCHUNGEN UND VERFAHREN ZU DEREN HERSTELLUNG**
SILANE COMPOUNDS AND METHOD FOR ITS MANUFACTURE
MÉLANGES DE SILANES ET LEUR PROCÉDÉ DE FABRICATION

(30) Priorität: 28.11.2017 DE 102017221282
(43) Veröffentlichungstag der Anmeldung: 29.05.2019
(73) Patentinhaber: Evonik Operations GmbH, 45128 Essen (DE)
(72) Erfinder: Röben, Caren, 45133 Essen (DE); Moser, Ralph, Jersey City, NJ 07310 (US); Köpfer, Alexander, 79872 Bernau im Schwarzwald (DE); Rosenstingl, Sebastian, 79539 Lörrach (DE); Mayer, Stefanie, 79618 Rheinfelden (DE); Hasse, Andre, 52428 Jülich (DE); Forster, Frank, 63825 Schöllkrippen (DE)
(74) Vertreter: Evonik Patent Association

(56) Entgegenhaltungen:
- EP-A1- 2 557 116
- DATABASE WPI Week 201241 2012 Thomson Scientific, London, GB; AN 2012-G69088 XP002790534, & JP 2012 111838 A (SHIKOKU KASEI KOGYO KK) 14. Juni 2012 (2012-06-14) -& JP 2012 111838 A (SHIKOKU CHEM) 14. Juni 2012 (2012-06-14)
- VONDRACEK P ET AL: "the effect of the structure of sulfur-containing silane coupling agents on their activity in silica-filled sbr", RUBBER CHEMISTRY AND TECHNOLOGY, AMERICAN CHEMICAL SOCIETY, RUBBER DIVISION, US, vol. 57, no. 4, 1 January 1984 (1984-01-01), pages 675-685, XP002241916, ISSN: 0035-9475

## Beschreibung

Die Erfindung betrifft Silanmischungen und Verfahren zu deren Herstellung.

Aus EP 0670347 und EP 0753549 sind Kautschukmischungen, enthaltend mindestens einen Vernetzer, einen Füllstoff, gegebenenfalls weitere Kautschukhilfsmittel sowie mindestens ein Verstärkungsadditiv der Formel

R¹R²R³Si-X¹-(-Sₓ-Y-)ₘ-(-Sₓ-X²-SiR¹R²R³)ₙ

bekannt.

Ferner sind aus EP 1375504 Silane der Formel

(R¹O)_{(3-P)}(R²)_{P}Si-R³-Sₘ-R⁴-(Sₙ-R⁴)_{q}-Sₘ-R³-Si(R²)_{P}(OR¹)_{(3-P)}

bekannt.

Aus WO 2005/059022 sind Kautschukmischungen, enthaltend ein Silan der Formel

[R²R³R⁴Si-R⁵-S-R⁶-R⁷-]R¹

bekannt.

Ferner sind Kautschukmischungen, enthaltend ein bifunktionelles Silan und ein weiteres Silan der Formel (Y)G(Z) (WO 2012/092062) und Kautschukmischungen, enthaltend Bistriethoxysilylpropylpolysulfid und Bistriethoxysilylpropylmonosulfid (EP1085045) bekannt.

Aus EP 1928949 ist eine Kautschukmischung, enthaltend die Silane (H₅C₂O)₃Si-(CH₂)₃-X-(CH₂)₆-S₂-(CH₂)₆-X-(CH₂)₃-Si(OC₂H₅)₃ und/oder (H₅C₂O)₃Si-(CH₂)₃-X-(CH₂)₁₀-S₂-(CH₂)₁₀-X-(CH₂)₃-Si(OC₂H₅)₃ und (H₅C₂O)₃Si-(CH₂)₃-Sₘ-(CH₂)₃-Si(OC₂H₅)₃ bekannt.

Ferner sind Silanmischungen, enthaltend Silane der Formel R¹R²R³Si-X¹-Sₓ-X²-SiR¹R²R³ und Silane der Formel R⁴R⁵R⁶Si-X³-(-S_{y}-Y-)ₘ-S_{y}-X⁴-SiR⁷R⁸R⁹ aus EP 2557116 bekannt.

Aus JP 2012111838 sind Kautschukmischungen, enthaltend Silane der Formel (R¹O)₃Si-(CH₂)ₙ-S-Y-S-(CH₂)ₙ-Si(OR)₃ bekannt. Silanmischungen werden nicht offenbart.

Aufgabe der vorliegenden Erfindung ist es, Silanmischungen zur Verfügung zu stellen, welche gegenüber aus dem Stand der Technik bekannten Silanen ein verbessertes Verarbeitungsverhalten und eine verbesserte Viskosität, höhere Vernetzungsausbeuten, höhere Verstärkung und einen verbesserten Rollwiderstand in Kautschukmischungen aufweisen.

Gegenstand der Erfindung ist eine Silanmischung, enthaltend ein Silan der Formel I

(R¹)_{y}(R₂)_{3-y}Si-R³-(S-R⁴)ₙ-Sₓ(R⁴-S)ₙ-R³-Si(R¹)_{y}(R²)_{3-y} (I),

und ein Silan der Formel II

(R¹)_{y}(R²)_{3-y}Si-R³-(S-R⁴)_{z}-S-R³-Si(R¹)_{y}(R²)_{3-y} (II),

wobei R¹ gleich oder verschieden sind und C1-C10-Alkoxygruppen, vorzugsweise Methoxy- oder Ethoxygruppen, Phenoxygruppen, C4-C10-Cycloalkoxygruppen oder Alkylpolyethergruppen -O-(R⁵-O)ᵣ-R⁶ mit R⁵ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind, vorzugsweise -CH₂-CH₂-, r eine ganze Zahl von 1 bis 30, vorzugsweise 3 bis 10, und R⁶ unsubstituierte oder substituierte, verzweigte oder unverzweigte einbindige Alkyl-, Alkenyl-, Aryl- oder Aralkylgruppen, vorzugsweise C₁₃H₂₇ Alkyl-Gruppe ist,
R² gleich oder verschieden sind und C6-C20-Arylgruppen, vorzugsweise Phenyl, C1-C10-Alkylgruppen, vorzugsweise Methyl oder Ethyl, C2-C20-Alkenylgruppe, C7-C20-Aralkylgruppe oder Halogen, vorzugsweise Cl ist,
R³ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe, bevorzugt C1-C20-, besonders bevorzugt C1-C10-, ganz besonders bevorzugt C2-C7-, insbesondere bevorzugt CH₂CH₂ und CH₂CH₂CH₂, sind,
R⁴ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe, bevorzugt C1-C20-, besonders bevorzugt C1-C10-, ganz besonders bevorzugt C2-C7-, insbesondere bevorzugt (CH₂)₆,
und x eine Zahl von 2 bis 10 ist, vorzugsweise 2 bis 4, besonders bevorzugt 2, ist,
n gleich sind und 0, 1, 2 oder 3, vorzugsweise 0 oder 1, besonders bevorzugt 1, sind, y gleich oder verschieden sind und 1, 2 oder 3 sind, z ist 1, 2 oder 3, vorzugsweise 1,
und das Molverhältnis an Silan der Formel I zu Silan der Formel II 19:81 - 81:19, vorzugsweise 20:80 - 75:25, besonders bevorzugt 20:80-70:30, ganz besonders bevorzugt 20:80 - 65:35, beträgt.

Bevorzugt kann die Silanmischung ein Silan der Formel I

(R¹)_{y}(R²)_{3-y}Si-R³-(S-R⁴)ₙ-Sₓ-(R⁴-S)ₙ-R³-Si(R¹)_{y}(R²)_{3-y} (I),

und ein Silan der Formel II

(R¹)_{y}(R²)_{3-y}Si-R³-(S-R⁴)_{z}-S-R³-Si(R¹)_{y}(R²)_{3-y} (II),

enthalten, wobei n gleich sind und 0 oder 1 sind, z gleich 1 ist und R¹, R², R³, R⁴, x und y die gleiche Bedeutung haben wie oben beschrieben.

Die erfindungsgemäße Silanmischung kann weitere Additive enthalten oder nur aus Silanen der Formel I und Silanen der Formel II bestehen.

Die erfindungsgemäße Silanmischung kann Oligomere, die durch Hydrolyse und Kondensation der Silane der Formel I und/oder Silane der Formel II entstehen, enthalten.

Die erfindungsgemäße Silanmischung kann auf einem Träger, beispielsweise Wachs, Polymer oder Ruß, aufgebracht sein. Die erfindungsgemäße Silanmischung kann auf einer Kieselsäure aufgebracht sein, wobei die Anbindung physikalisch oder chemisch erfolgt sein kann.

R³ bzw. R⁴ können unabhängig voneinander -CH₂-, -CH₂CH₂-, -CH₂CH₂CH₂-, -CH₂CH₂CH₂CH₂-,-CH(CH₃)-, -CH₂CH(CH₃)-, -CH(CH₃)CH₂-, -C(CH₃)₂-, -CH(C₂H₅)-, -CH₂CH₂CH(CH₃)-,-CH(CH₃)CH₂CH₂-, -CH₂CH(CH₃)CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂CH₂CH₂-oder 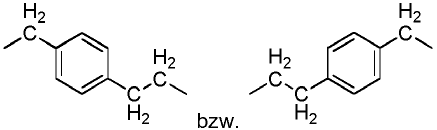 sein.

R¹ kann bevorzugt Methoxy oder Ethoxy sein.

Silane der Formel I können bevorzugt sein:
(EtO)₃Si-CH₂-S₂-CH₂-Si(OEt)₃,
(EtO)₃Si-(CH₂)₂-S₂-(CH₂)₂-Si(OEt)₃,
(EtO)₃Si-(CH₂)₃-S₂-(CH₂)₃-Si(OEt)₃,
(EtO)₃Si-CH₂-S₄-CH₂-Si(OEt)₃,
(EtO)₃Si-(CH₂)₂-S₄-(CH₂)₂-Si(OEt)₃,
(EtO)₃Si-(CH₂)₃-S₄-(CH₂)₃-Si(OEt)₃,
(EtO)₃Si-CH₂-S-(CH₂)-S₂-(CH₂)-S-CH₂-Si(OEt)₃,
(EtO)₃Si-(CH₂)₂-S-(CH₂)-S₂-(CH₂)-S-(CH₂)₂-Si(OEt)₃,
(EtO)₃Si-(CH₂)₃-S-(CH₂)-S₂-(CH₂)-S-(CH₂)₃-Si(OEt)₃,
(EtO)₃Si-CH₂-S-(CH₂)₂-S₂-(CH₂)₂-S-CH₂-Si(OEt)₃,
(EtO)₃Si-(CH₂)₂-S-(CH₂)₂-S₂-(CH₂)₂-S-(CH₂)₂-Si(OEt)₃,
(EtO)₃Si-(CH₂)₃-S-(CH₂)₂-S₂-(CH₂)₂-S-(CH₂)₃-Si(OEt)₃,
(EtO)₃Si-CH₂-S-(CH₂)₃-S₂-(CH₂)₃-S-CH₂-Si(OEt)₃,
(EtO)₃Si-(CH₂)₂-S-(CH₂)₃-S₂-(CH₂)₃-S-(CH₂)₂-Si(OEt)₃,
(EtO)₃Si-(CH₂)₃-S-(CH₂)₃-S₂-(CH₂)₃-S-(CH₂)₃-Si(OEt)₃,
(EtO)₃Si-CH₂-S-(CH₂)₄-S₂-(CH₂)₄-S-CH₂-Si(OEt)₃,
(EtO)₃Si-(CH₂)₂-S-(CH₂)₄-S₂-(CH₂)₄-S-(CH₂)₂-Si(OEt)₃,
(EtO)₃Si-(CH₂)₃-S-(CH₂)₄-S₂-(CH₂)₄-S-(CH₂)₃-Si(OEt)₃,
(EtO)₃Si-CH₂-S-(CH₂)₅-S₂-(CH₂)₅-S-CH₂-Si(OEt)₃,
(EtO)₃Si-(CH₂)₂-S-(CH₂)₅-S₂-(CH₂)₅-S-(CH₂)₂-Si(OEt)₃,
(EtO)₃Si-(CH₂)₃-S-(CH₂)₅-S₂-(CH₂)₅-S-(CH₂)₃-Si(OEt)₃,
(EtO)₃Si-CH₂-S-(CH₂)₆-S₂-(CH₂)₆-S-CH₂-Si(OEt)₃,
(EtO)₃Si-(CH₂)₂-S-(CH₂)₆-S₂-(CH₂)₆-S-(CH₂)₂-Si(OEt)₃,
(EtO)₃Si-(CH₂)₃-S-(CH₂)₆-S₂-(CH₂)₆-S-(CH₂)₃-Si(OEt)₃.

Insbesondere bevorzugt ist das Silan der Formel I (EtO)₃Si-(CH₂)₃-S-(CH₂)₆-S₂-(CH₂)₆-S-(CH₂)₃-Si(OEt)₃.

Silane der Formel II können bevorzugt sein:
(EtO)₃Si-CH₂-S-CH₂-S-CH₂-Si(OEt)₃,
(EtO)₃Si-(CH₂)₂-S-CH₂-S-(CH₂)₂-Si(OEt)₃,
(EtO)₃Si-(CH₂)₃-S-CH₂-S-(CH₂)₃-Si(OEt)₃,
(EtO)₃Si-CH₂-S-(CH₂)₂-S-CH₂-Si(OEt)₃,
(EtO)₃Si-(CH₂)₂-S-(CH₂)₂-S-(CH₂)₂-Si(OEt)₃,
(EtO)₃Si-(CH₂)₃-S-(CH₂)₂-S-(CH₂)₃-Si(OEt)₃,
(EtO)₃Si-CH₂-S-(CH₂)₃-S-CH₂-Si(OEt)₃,
(EtO)₃Si-(CH₂)₂-S-(CH₂)₃-S-(CH₂)₂-Si(OEt)₃,
(EtO)₃Si-(CH₂)₃-S-(CH₂)₃-S-(CH₂)₃-Si(OEt)₃,
(EtO)₃Si-CH₂-S-(CH₂)₄-S-CH₂-Si(OEt)₃,
(EtO)₃Si-(CH₂)₂-S-(CH₂)₄-S-(CH₂)₂-Si(OEt)₃,
(EtO)₃Si-(CH₂)₃-S-(CH₂)₄-S-(CH₂)₃-Si(OEt)₃,
(EtO)₃Si-CH₂-S-(CH₂)₅-S-CH₂-Si(OEt)₃,
(EtO)₃Si-(CH₂)₂-S-(CH₂)₅-S-(CH₂)₂-Si(OEt)₃,
(EtO)₃Si-(CH₂)₃-S-(CH₂)₅-S-(CH₂)₃-Si(OEt)₃,
(EtO)₃Si-CH₂-S-(CH₂)₆-S-CH₂-Si(OEt)₃,
(EtO)₃Si-(CH₂)₂-S-(CH₂)₆-S-(CH₂)₂-Si(OEt)₃,
(EtO)₃Si-(CH₂)₃-S-(CH₂)₆-S-(CH₂)₃-Si(OEt)₃,

Insbesondere bevorzugt ist das Silan der Formel II (EtO)₃Si-(CH₂)₃-S-(CH₂)₆-S-(CH₂)₃-Si(OEt)₃.

Ganz besonders bevorzugt ist eine Silanmischung aus (EtO)₃Si-(CH₂)₃-(S-(CH₂)₆)ₙ-S₂-((CH₂)₆-S)ₙ-(CH₂)₃-Si(OEt)₃ und (EtO)₃Si-(CH₂)₃-S-(CH₂)₆-S-(CH₂)₃-Si(OEt)₃, wobei n gleich sind und 0 oder 1 sind.

Außerordentlich bevorzugt ist eine Silanmischung aus (EtO)₃Si-(CH₂)₃-S-(CH₂)₆-S₂-(CH₂)₆-S-(CH₂)₃-Si(OEt)₃ und (EtO)₃Si-(CH₂)₃-S-(CH₂)₆-S-(CH₂)₃-Si(OEt)₃.

Ein weiterer Gegenstand der Erfindung ist ein erstes Verfahren zur Herstellung der erfindungsgemäßen Silanmischung, welches dadurch gekennzeichnet ist, dass man das Silan der Formel I

(R¹)_{y}(R²)_{3-y}Si-R³-(S-R⁴)ₙ-Sₓ-(R⁴-S)ₙ-R³-Si(R¹)_{y}(R²)_{3-y} (I),

und ein Silan der Formel II

(R¹)_{y}(R²)_{3-y}Si-R³-(S-R⁴)_{z}-S-R³-Si(R¹)_{y}(R²)_{3-y} (II),

wobei R¹, R², R³, R⁴, n, x, y und z die oben genannte Bedeutung haben,
in einem Molverhältnis von 19:81 - 81:19, vorzugsweise 20:80 - 75:25, besonders bevorzugt 20:80-70:30, ganz besonders bevorzugt 20:80 - 65:35, mischt.

Vorzugsweise kann man ein Silan der Formel I

(R¹)_{y}(R²)_{3-y}Si-R³-(S-R⁴)ₙ-Sₓ-(R⁴-S)ₙ-R³-Si(R¹)_{y}(R²)_{3-y} (I),

und ein Silan der Formel II

(R¹)_{y}(R²)_{3-y}Si-R³-(S-R⁴)_{z}-S-R³-Si(R¹)_{y}(R²)_{3-y} (II),

wobei R¹, R², R³, R⁴, x und y die oben genannte Bedeutung haben und n gleich sind und 0 oder 1 sind und z = 1 ist, mischen.

Das erfindungsgemäße Verfahren kann unter Luftausschluss durchgeführt werden. Das erfindungsgemäße Verfahren kann unter Schutzgasatmosphäre durchgeführt werden, zum Beispiel unter Argon oder Stickstoff, bevorzugt unter Stickstoff.

Das erfindungsgemäße Verfahren kann bei Normaldruck, erhöhtem Druck oder reduziertem Druck durchgeführt werden. Bevorzugt kann das erfindungsgemäße Verfahren bei Normaldruck durchgeführt werden.
Erhöhter Druck kann ein Druck von 1,1 bar bis 100 bar, bevorzugt von 1,1 bar bis 50 bar, besonders bevorzugt von 1,1 bar bis 10 bar und ganz besonders bevorzugt von 1,1 bis 5 bar, sein. Reduzierter Druck kann ein Druck von 1 mbar bis 1000 mbar, bevorzugt 250 mbar bis 1000 mbar, besonders bevorzugt 500 mbar bis 1000 mbar sein.

Das erfindungsgemäße Verfahren kann zwischen 20 °C und 100 °C, bevorzugt zwischen 20 °C und 50 °C, besonders bevorzugt zwischen 20 °C und 30 °C, durchgeführt werden.

Das erfindungsgemäße Verfahren kann in einem Lösungsmittel, beispielsweise Methanol, Ethanol, Propanol, Butanol, Cyclohexanol, N,N-Dimethylformamid, Dimethylsulfoxid, Pentan, Hexan, Cyclohexan, Heptan, Octan, Dekan, Toluol, Xylol, Aceton, Acetonitril, Tetrachlorkohlenstoff, Chloroform, Dichlormethan, 1,2-Dichlorethan, Tetrachlorethylen, Diethylether, Methyltertbutylether, Methylethylketon, Tetrahydrofuran, Dioxan, Pyridin oder Essigsäuremethylester oder einer Mischung der zuvor genannten Lösungsmittel durchgeführt werden. Das erfindungsgemäße Verfahren kann bevorzugt ohne Lösungsmittel durchgeführt werden.

Ein weiterer Gegenstand der Erfindung ist ein Verfahren zur Herstellung der erfindungsgemäßen Silanmischung mit n = 1 und z = 1, welches dadurch gekennzeichnet ist, dass man
in einem ersten Schritt ein Mercaptosilan der Formel III

(R¹)_{y}(R²)_{3-y}Si-R³-SH (III)

mit einer Halogenverbindung der Formel IV

Hal-R⁴-Hal (IV),

wobei R¹, R², R³ und R⁴ die oben genannte Bedeutungen haben und Hal gleich F, Cl, Br oder I , vorzugsweise Cl, ist,
in einem Molverhältnis der Formel (III) zur Formel (IV) von 34:66 - 64:36 umsetzt
und in einem zweiten Schritt das Produkt aus dem ersten Verfahrensschritt mit Natriumpolysulfid der Formel (V)

Na2Sx (V)

wobei x die oben genannte Bedeutung hat, umsetzt.

Die Umsetzung im ersten Schritt kann unter Zugabe einer Base erfolgen. Die Base kann mit dem Mercaptosilan der Formel (III) umgesetzt werden und anschließend mit der Halogenverbindung der Formel (IV).

Mercaptosilane der Formel III können bevorzugt sein:
(C₂H₅O)₃Si-CH₂-SH,
(C₂H₅O)₃Si-CH₂CH₂-SH,
(C₂H₅O)₃Si-CH₂CH₂CH₂-SH.

Halogenverbindungen der Formel IV können bevorzugt sein:
Cl-CH₂-Cl,
Cl-CH₂CH₂-Cl,
Cl-CH₂CH₂CH₂-Cl,
Cl-CH₂CH₂CH₂CH₂-Cl,
Cl-CH₂CH₂CH₂CH₂CH₂-Cl,
Cl-CH₂CH₂CH₂CH₂CH₂CH₂-Cl,
Cl-CH₂CH₂CH₂CH₂CH₂CH₂CH₂-Cl oder,
Cl-CH₂CH₂CH₂CH₂CH₂CH₂CH₂CH₂-Cl

Insbesondere bevorzugt kann das Mercaptosilan der Formel III
(EtO)₃Si-(CH₂)₃-SH
die Halogenverbindung der Formel IV
Cl-(CH₂)₆-Cl
und das Natriumpolysulfid der Formel V
Na2S2 sein.

Bei dem Verfahren zur Herstellung der erfindungsgemäßen Silanmischung mit n = 1 und z = 1 kann der erste und zweite Verfahrensschritt in einem Reaktionsbehälter durch Zugabe aller Edukte erfolgen.

Bei dem ersten Schritt des Verfahrens zur Herstellung der erfindungsgemäßen Silanmischung mit n = 1 und z = 1 kann die Halogenverbindung der Formel IV zu dem Mercaptosilan der Formel III dosiert werden.

Bei dem ersten Schritt des Verfahrens zur Herstellung der erfindungsgemäßen Silanmischung mit n = 1 und z = 1 kann bevorzugt das Mercaptosilan der Formel III zu der Halogenverbindung der Formel IV dosiert werden.

Die Reaktion im ersten Schritt des Verfahrens zur Herstellung der erfindungsgemäßen Silanmischung mit n = 1 und z = 1 kann unter Luftausschluss durchgeführt werden.
Die Reaktion im ersten Schritt des Verfahrens zur Herstellung der erfindungsgemäßen Silanmischung mit n = 1 und z = 1 kann unter Schutzgasatmosphäre durchgeführt werden, zum Beispiel unter Argon oder Stickstoff, bevorzugt unter Stickstoff.

Der erste Schritt des Verfahrens zur Herstellung der erfindungsgemäßen Silanmischung mit n = 1 und z = 1 kann bei Normaldruck, erhöhtem Druck oder reduziertem Druck durchgeführt werden. Bevorzugt kann das erfindungsgemäße Verfahren bei Normaldruck durchgeführt werden. Erhöhter Druck kann ein Druck von 1,1 bar bis 100 bar, bevorzugt von 1,1 bar bis 50 bar, besonders bevorzugt von 1,1 bar bis 10 bar und ganz besonders bevorzugt von 1,1 bis 5 bar, sein. Reduzierter Druck kann ein Druck von 1 mbar bis 1000 mbar, bevorzugt 250 mbar bis 1000 mbar, besonders bevorzugt 500 mbar bis 1000 mbar sein.

Der erste Schritt des Verfahrens zur Herstellung der erfindungsgemäßen Silanmischung mit n = 1 und z = 1 kann zwischen 0 °C und 150 °C, bevorzugt zwischen 30 °C und 100 °C, besonders bevorzugt zwischen 60 °C und 80 °C durchgeführt werden.

Die Umsetzung im ersten Schritt des Verfahrens zur Herstellung der erfindungsgemäßen Silanmischung mit n = 1 und z = 1 kann ohne Lösungsmittel oder in einem Lösungsmittel, beispielsweise Methanol, Ethanol, Propanol, Butanol, Cyclohexanol, N,N-Dimethylformamid, Dimethylsulfoxid, Pentan, Hexan, Cyclohexan, Heptan, Octan, Dekan, Toluol, Xylol, Aceton, Acetonitril, Tetrachlorkohlenstoff, Chloroform, Dichlormethan, 1,2-Dichlorethan, Tetrachlorethylen, Diethylether, Methyltertbutylether, Methylethylketon, Tetrahydrofuran, Dioxan, Pyridin, Ethylacetat oder eine Mischung der zuvor genannten Lösungsmittel durchgeführt werden. Das Lösungsmittel kann bevorzugt Dichlormethan, Ethanol, Methyltertbutylether, Toluol, Ethylacetat, Pentan, Hexan oder eine Mischung der zuvor genannten Lösungsmittel sein.

Die Umsetzung im ersten Schritt des Verfahrens zur Herstellung der erfindungsgemäßen Silanmischung mit n = 1 und z = 1 kann ohne organisches Lösungsmitteln durchgeführt werden. Das Lösungsmittel kann Wasser sein.

Das Reaktionsprodukt aus dem ersten Schritt des Verfahrens zur Herstellung der erfindungsgemäßen Silanmischung mit n = 1 und z = 1 kann anschließend durch Filtration von festen Nebenprodukten befreit werden.

Das Lösungsmittel im ersten Schritt des Verfahrens zur Herstellung der erfindungsgemäßen Silanmischung mit n = 1 und z = 1 kann anschließend entfernt, vorzugsweise abdestilliert, werden.

Die Reaktion im zweiten Schritt des Verfahrens zur Herstellung der erfindungsgemäßen Silanmischung mit n = 1 und z = 1 kann unter Luftausschluss durchgeführt werden.

Die Reaktion im zweiten Schritt des Verfahrens zur Herstellung der erfindungsgemäßen Silanmischung mit n = 1 und z = 1 kann unter Schutzgasatmosphäre durchgeführt werden, zum Beispiel unter Argon oder Stickstoff, bevorzugt unter Stickstoff.

Der zweite Schritt des Verfahrens zur Herstellung der erfindungsgemäßen Silanmischung mit n = 1 und z = 1 kann bei Normaldruck, erhöhtem Druck oder reduziertem Druck durchgeführt werden. Bevorzugt kann das erfindungsgemäße Verfahren bei Normaldruck durchgeführt werden. Erhöhter Druck kann ein Druck von 1,1 bar bis 100 bar, bevorzugt von 1,1 bar bis 50 bar, besonders bevorzugt von 1,1 bar bis 10 bar und ganz besonders bevorzugt von 1,1 bis 5 bar, sein. Reduzierter Druck kann ein Druck von 1 mbar bis 1000 mbar, bevorzugt 250 mbar bis 1000 mbar, besonders bevorzugt 500 mbar bis 1000 mbar sein.

Der zweite Schritt des Verfahrens zur Herstellung der erfindungsgemäßen Silanmischung mit n = 1 und z = 1 kann zwischen 20 °C und 150 °C, bevorzugt zwischen 40 °C und 100 °C, besonders bevorzugt zwischen 60 °C und 90 °C, durchgeführt werden.

Die Umsetzung im zweiten Schritt des Verfahrens zur Herstellung der erfindungsgemäßen Silanmischung mit n = 1 und z = 1 kann ohne Lösungsmittel oder in einem Lösungsmittel, beispielsweise Methanol, Ethanol, Propanol, Butanol, Cyclohexanol, N,N-Dimethylformamid, Dimethylsulfoxid, Pentan, Hexan, Cyclohexan, Heptan, Octan, Dekan, Toluol, Xylol, Aceton, Acetonitril, Tetrachlorkohlenstoff, Chloroform, Dichlormethan, 1,2-Dichlorethan, Tetrachlorethylen, Diethylether, Methyltertbutylether, Methylethylketon, Tetrahydrofuran, Dioxan, Pyridin oder Ethylacetat, durchgeführt werden. Das Lösungsmittel kann bevorzugt Ethanol sein.

Die Umsetzung im zweiten Schritt des Verfahrens zur Herstellung der erfindungsgemäßen Silanmischung mit n = 1 und z = 1 kann ohne organisches Lösungsmitteln durchgeführt werden. Das Lösungsmittel kann Wasser sein.

Das Reaktionsprodukt im zweiten Schritt des Verfahrens zur Herstellung der erfindungsgemäßen Silanmischung mit n = 1 und z = 1 kann filtriert werden und der Filterkuchen mit einem organischen Lösungsmittel gewaschen werden. Bevorzugt kann mit einem Alkohol, besonders bevorzugt Ethanol, oder einem Alkan, besonders bevorzugt Hexan, gewaschen werden.

Das Lösungsmittel im zweiten Schritt des Verfahrens zur Herstellung der erfindungsgemäßen Silanmischung mit n = 1 und z = 1 kann anschließend entfernt, vorzugsweise abdestilliert, werden. Das Reaktionsprodukt im zweiten Schritt des Verfahrens zur Herstellung der erfindungsgemäßen Silanmischung mit n = 1 und z = 1 kann nach der Filtration und Lösungsmittelentfernung getrocknet werden. Die Trocknung kann bei Temperaturen von 20 °C - 100 °C, vorzugsweise von 25 °C - 50 °C, erfolgen. Die Trocknung kann bei Unterdruck von 1 - 500 mbar erfolgen.

Die erfindungsgemäße Silanmischung kann als Haftvermittler zwischen anorganischen Materialien, zum Beispiel Glaskugeln, Glassplittern, Glasoberflächen, Glasfasern, oder oxidischen Füllstoffen, bevorzugt Kieselsäuren wie gefällten Kieselsäuren und pyrogenen Kieselsäuren,
und organischen Polymeren, zum Beispiel Duroplasten, Thermoplasten oder Elastomeren, beziehungsweise als Vernetzungsmittel und Oberflächenmodifizierungsmittel für oxidische Oberflächen verwendet werden.

Die erfindungsgemäße Silanmischung kann als Kopplungsreagenz in gefüllten Kautschukmischungen, beispielsweise Reifenlaufflächen, technischen Gummiartikeln oder Schuhsolen, verwendet werden.

Vorteile der erfindungsgemäßen Silanmischungen sind verbessertes Verarbeitungsverhalten, eine verbesserte Viskosität, höhere Vernetzungsausbeuten, höhere Verstärkung und ein verbesserter Rollwiderstand in Kautschukmischungen.

### Beispiele

NMR-Methode: Die in den Beispielen als Analysenergebnisse angegebenen Molverhältnisse und Massenanteile stammen aus ¹³C-NMR-Messungen mit den folgenden Kennzahlen: 100.6 MHz, 1000 Scans, Lösungsmittel CDCl₃, interner Standard für die Kalibrierung: Tetramethylsilan, Relaxationshilfsmittel Cr(acac)₃, für die Bestimmung des Massenanteils im Produkt wurde eine definierte Menge Dimethylsulfon als interner Standard zugegeben und aus den Molverhältnissen der Produkte dazu der Massenanteil berechnet.

### Vergleichsbeispiel 1: 6-Bis(thiopropyltriethoxysilylhexyl)disulfid

6-Bis(thiopropyltriethoxysilylhexyl)disulfid wurde gemäß Synthesebeispiel 1 und Beispiel 1 der EP 1375504 hergestellt.
Gegenüber dem Synthesebeispiel 1 der EP 1375504 wurde das Zwischenprodukt nicht destilliert. Analytik: (88% Ausbeute, Molverhältnis: Silan der Formel I: 94% (EtO)₃Si(CH₂)₃S(CH₂)₆S₂(CH₂)₆S(CH₂)₃Si(OEt)₃ und Silan der Formel II: 6% (EtO)₃Si(CH₂)₃S(CH₂)₆S(CH₂)₃Si(OEt)₃, Gew.-%: Silan der Formel I: 95 Gew.-% (EtO)₃Si(CH₂)₃S(CH₂)₆S₂(CH₂)₆S(CH₂)₃Si(OEt)₃ und Silan der Formel II: 5 Gew.-% (EtO)₃Si(CH₂)₃S(CH₂)₆S(CH₂)₃Si(OEt)₃)

### Vergleichsbeispiel 2: 1,6-Bis(thiopropyltriethoxysilyl)hexan

Zu Mercaptopropyltriethoxysilan (62,0 g; 0,260 mol; 2,10 eq) wurde Natriumethanolat (21% in EtOH; 82,3 g; 0,254 mol; 2,05 eq) so zu dosiert, dass die Reaktionstemperatur nicht 35 °C überstieg. Nach vollständiger Zugabe wurde 2 h am Rückfluss erhitzt. Dann wurde das Reaktionsgemisch zu 1,6-Dichlorhexan (19,2 g; 0,124 mol; 1,00 eq) über 1,5 h bei 80 °C zugegeben. Nach vollständiger Zugabe wurde 3 h am Rückfluss erhitzt und anschließend auf Raumtemperatur erkalten gelassen. Ausgefallene Salze wurden abfiltriert und das Produkt unter vermindertem Druck vom Lösungsmittel befreit. Das Produkt (Ausbeute: 88%, Reinheit: >99% im ¹³C-NMR) wurde als klare Flüssigkeit erhalten.

### Vergleichsbeispiel 3: Bis(triethoxysilylpropyl)disulfid der Firma Evonik Industries AG.

### Vergleichsbeispiel 4: Bis(triethoxysilylpropyl)sulfid.

Zu einer Lösung von Chlorpropyltriethoxysilan (361 g; 1,5 mol; 1,92 eq) in Ethanol (360 ml) wurde Na₂S (61,5 g; 0,78 mol; 1,00 eq) portionsweise so zugegeben, dass 60 °C nicht überschritten wurden. Nach vollständiger Zugabe wurde 3 h am Rückfluss erhitzt ehe auf Raumtemperatur erkalten gelassen wurde. Das Reaktionsprodukt wurde durch Filtration von ausgefallenen Salzen befreit. Durch eine destillative Aufreinigung (0,04 mbar; 110 °C) konnte das Produkt (Ausbeute: 73%, Reinheit: >99% im ¹³C-NMR) als klare Flüssigkeit erhalten werden.

### Vergleichsbeispiel 5:

In einen PE-Flachbeutel der Firma Kaiser und Kraft (Folienstärke: 50µm) wurden 4,3 Gewichtsteile Vergleichsbeispiel 3 mit 2,6 Gewichtsteilen Vergleichsbeispiel 4 eingewogen und vermischt. Diese Mischung entspricht einem Molverhältnis: Silan der Formel I: 60% (EtO)₃Si(CH₂)₃S₂(CH₂)₃Si(OEt)₃ und Silan der Formel II: 40% (EtO)₃Si(CH₂)₃S(CH₂)₃Si(OEt)₃.

### Vergleichsbeispiel 6:

In einen PE-Flachbeutel der Firma Kaiser und Kraft (Folienstärke: 50µm) wurden 2,9 Gewichtsteile Vergleichsbeispiel 3 mit 3,8 Gewichtsteilen Vergleichsbeispiel 4 eingewogen und vermischt. Diese Mischung entspricht einem Molverhältnis: Silan der Formel I: 40% (EtO)₃Si(CH₂)₃S₂(CH₂)₃Si(OEt)₃ und Silan der Formel II: 60% (EtO)₃Si(CH₂)₃S(CH₂)₃Si(OEt)₃.

Vergleichsbeispiel 7: In einen PE-Flachbeutel der Firma Kaiser und Kraft (Folienstärke: 50µm) wurden 1,4 Gewichtsteile Vergleichsbeispiel 3 mit 5,1 Gewichtsteilen Vergleichsbeispiel 4 eingewogen und vermischt. Diese Mischung entspricht einem Molverhältnis: Silan der Formel I: 20% (EtO)₃Si(CH₂)₃S₂(CH₂)₃Si(OEt)₃ und Silan der Formel II: 80% (EtO)₃Si(CH₂)₃S(CH₂)₃Si(OEt)₃.

### Beispiel 1:

In einen PE-Flachbeutel der Firma Kaiser und Kraft (Folienstärke: 50µm) wurden 47,2 g Vergleichsbeispiel 1 mit 9,2 g Vergleichsbeispiel 2 eingewogen und vermischt. Diese Mischung entspricht einem Molverhältnis: Silan der Formel I: 75% (EtO)₃Si(CH₂)₃S(CH₂)₆S₂(CH₂)₆S(CH₂)₃Si(OEt)₃ und Silan der Formel II: 25% (EtO)₃Si(CH₂)₃S(CH₂)₆S(CH₂)₃Si(OEt)₃.

### Beispiel 2:

In einen PE-Flachbeutel der Firma Kaiser und Kraft (Folienstärke: 50µm) wurden 46,8 g Vergleichsbeispiel 1 mit 24,3 g Vergleichsbeispiel 2 eingewogen und vermischt. Diese Mischung entspricht einem Molverhältnis: Silan der Formel I: 57% (EtO)₃Si(CH₂)₃S(CH₂)₆S₂(CH₂)₆S(CH₂)₃Si(OEt)₃ und Silan der Formel II: 43% (EtO)₃Si(CH₂)₃S(CH₂)₆S(CH₂)₃Si(OEt)₃.

### Beispiel 3:

In einen PE-Flachbeutel der Firma Kaiser und Kraft (Folienstärke: 50µm) wurden 45,6 g Vergleichsbeispiel 1 mit 36,0 g Vergleichsbeispiel 2 eingewogen und vermischt. Diese Mischung entspricht einem Molverhältnis: Silan der Formel I: 47% (EtO)₃Si(CH₂)₃S(CH₂)₆S₂(CH₂)₆S(CH₂)₃Si(OEt)₃ und Silan der Formel II: 53% (EtO)₃Si(CH₂)₃S(CH₂)₆S(CH₂)₃Si(OEt)₃.

### Beispiel 4:

NaOEt (21% in EtOH; 1562 g; 4,820 mol) wurde über 1 h zu Mercaptopropyltriethoxysilan (1233 g; 5,170 mol) dosiert während bei Raumtemperatur gerührt wurde. Nach vollständiger Zugabe wurde die Reaktionsmischung 2 h am Rückfluss erhitzt und anschließend auf Raumtemperatur erkalten gelassen. Das entstandene Intermediat wurde über 30 min zu auf 80 °C erwärmtem 1,6-Dichlorhexan (801,7 g; 5,170 mol) dosiert. Nach vollständiger Zugabe wurde das Reaktionsgemisch 3 h am Rückfluss erhitzt bevor es auf Raumtemperatur erkalten gelassen wurde. Die Reaktionsmischung wurde filtriert und der Filterkuchen mit EtOH gespült. Die flüchtigen Bestandteile wurden unter vermindertem Druck entfernt und das Zwischenprodukt 1-Chlor-6-thiopropyltriethoxysilylhexan (Ausbeute: 88%, Molverhältnis: 66% 1-Chlor-6-thiopropyltriethoxysilylhexan, 34% Bis(thiopropyltriethoxysilyl)hexan; Gew.-%: 56 Gew.-% 1-Chlor-6-thiopropyltriethoxysilylhexan, 44 Gew.-% 1,6-Bis(thiopropyltriethoxysilyl)hexan) erhalten.

### Beispiel 5:

Eine Lösung von NaSH (40% in Wasser; 46,01 g; 0,3283 mol; 1,044 eq.) und Na₂CO₃ (38,44 g; 0,3627 mol; 1,153 eq.) in Wasser (123,2 g; 6,837 mol; 21,74 eq.) wurde unter Rühren auf 80 °C erwärmt. Schwefel (9,940 g; 0,3101 mol; 0,9859 eq.) wurde zugegeben und die Mischung wurde 45 min gerührt. Tetrabutylphosphoniumbromid (50% in Wasser; 2,560 g; 3,774 mmol; 0,012 eq.) und das Zwischenprodukt 1-Chlor-6-thiopropyltriethoxysilylhexan aus Beispiel 4 (224,6 g; 0,6290 mol; 2,000 eq.) wurde über 30 min zugegeben und dann 5 h bei 75-80 °C gerührt. Die organische Phase wurde abgetrennt und unter vermindertem Druck von flüchtigen Bestandteilen befreit. 6-Bis(thiopropyltriethoxysilylhexyl)disulfid (Ausbeute: 97%, Molverhältnis: Silan der Formel I: 64% (EtO)₃Si(CH₂)₃S(CH₂)₆S₂(CH₂)₆S(CH₂)₃Si(OEt)₃ und Silan der Formel II: 36% (EtO)₃Si(CH₂)₃S(CH₂)₆S(CH₂)₃Si(OEt)₃, Gew.%: Silan der Formel I: 69 Gew.-% (EtO)₃Si(CH₂)₃S(CH₂)₆S₂(CH₂)₆S(CH₂)₃Si(OEt)₃ und Silan der Formel II: 31 Gew.-% (EtO)₃Si(CH₂)₃S(CH₂)₆S(CH₂)₃Si(OEt)₃) wurde als klare Flüssigkeit erhalten.

### Beispiel 6:

H₂S (27,179 g; 0,798 mol; 1,40 eq) wurde bei 60 °C zu NaOEt (ca. 21% in EtOH; hergestellt aus Natrium (27,50 g; 1,196 mol; 2,10 eq) und EtOH (425 g) über 20 min dosiert. Nach der Zugabe und Reaktionszeit von 30 Minuten wurde Schwefel (20,07 g; 0,627 mol; 1,10 eq) zugegeben. Nach 20 min wurde 1-Chlor-6-thiopropyltriethoxysilylhexan aus Beispiel 4 (61% Reinheit; 600 g, 1,139 mol, 2,00 eq) zu dosiert. Anschließend wurde die Reaktionstemperatur auf 80 °C eingestellt und bis zum vollständigen Umsatz gerührt. Nach erfolgter Reaktion wurden entstandene Feststoffe durch Filtration abgetrennt und das Produkt unter vermindertem Druck vom Lösungsmittel befreit. Bis(thiopropyltriethoxysilylhexyl)disulfid (Ausbeute: 98%, Molverhältnis: Silan der Formel I: 64% (EtO)₃Si(CH₂)₃S(CH₂)₆S₂(CH₂)₆S(CH₂)₃Si(OEt)₃ und Silan der Formel II: 36% (EtO)₃Si(CH₂)₃S(CH₂)₆S(CH₂)₃Si(OEt)₃, Gew.-%: Silan der Formel I: 69 Gew.-% (EtO)₃Si(CH₂)₃S(CH₂)₆S₂(CH₂)₆S(CH₂)₃Si(OEt)₃ und Silan der Formel II: 31 Gew.-% (EtO)₃Si(CH₂)₃S(CH₂)₆S(CH₂)₃Si(OEt)₃) wurde als klare Flüssigkeit erhalten.

### Beispiel 7:

1-Chlor-6-thiopropyltriethoxysilylhexan aus Beispiel 4 (61% Reinheit; 600,0 g; 1,139 mol; 2,00 eq) wurde in EtOH (600 g) gelöst. Danach wurde Natriumpolysulfid (Na₂S_{3,79}; 20,02 g; 0,120 mol; 0,21 eq) als Feststoff zugegeben, die Reaktionsmischung auf 60 °C erwärmt und für 30-60 Minuten gehalten. Nun erfolgt bei 60 °C die erste von insgesamt acht Na₂S-Dosierungen (insgesamt 13,33 g; 0,171 mol; 0,3 eq). Danach wurde 1 h am Rückfluss erhitzt. Die restlichen sieben Na₂S - Dosierungen erfolgten bei Rückfluss und in einem Abstand von jeweils 10 Minuten. Nach der letzten Na₂S -Dosierung wurde noch zwei Stunden am Rückfluss erhitzt und dann auf Raumtemperatur erkalten gelassen. Das Reaktionsgemisch wurde filtriert. Das Filtrat wurde unter vermindertem Druck von flüchtigen Bestandteilen befreit und erneut filtriert. Das Produkt (95%, Molverhältnis: Silan der Formel I: 64% (EtO)₃Si(CH₂)₃S(CH₂)₆S₂(CH₂)₆S(CH₂)₃Si(OEt)₃ und Silan der Formel II: 36% (EtO)₃Si(CH₂)₃S(CH₂)₆S(CH₂)₃Si(OEt)₃, Gew.-%: Silan der Formel I: 69 Gew.-% (EtO)₃Si(CH₂)₃S(CH₂)₆S₂(CH₂)₆S(CH₂)₃Si(OEt)₃ und Silan der Formel II: 31 Gew.-% (EtO)₃Si(CH₂)₃S(CH₂)₆S(CH₂)₃Si(OEt)₃) wurde als klare Flüssigkeit erhalten.

### Beispiel 8:

In einen PE-Flachbeutel der Firma Kaiser und Kraft (Folienstärke: 50µm) wurden 7,2 Gewichtsteile Vergleichsbeispiel 1 mit 3,4 Gewichtsteilen Vergleichsbeispiel 2 eingewogen und vermischt. Diese Mischung entspricht einem Molverhältnis: Silan der Formel I: 59% (EtO)₃Si(CH₂)₃S(CH₂)₆S₂(CH₂)₆S(CH₂)₃Si(OEt)₃ und Silan der Formel II: 41% (EtO)₃Si(CH₂)₃S(CH₂)₆S(CH₂)₃Si(OEt)₃.

### Beispiel 9:

In einen PE-Flachbeutel der Firma Kaiser und Kraft (Folienstärke: 50µm) wurden 7,2 Gewichtsteile Vergleichsbeispiel 1 mit 4,6 Gewichtsteilen Vergleichsbeispiel 2 eingewogen und vermischt. Diese Mischung entspricht einem Molverhältnis: Silan der Formel I: 52% (EtO)₃Si(CH₂)₃S(CH₂)₆S₂(CH₂)₆S(CH₂)₃Si(OEt)₃ und Silan der Formel II: 48% (EtO)₃Si(CH₂)₃S(CH₂)₆S(CH₂)₃Si(OEt)₃.

### Beispiel 10:

In einen PE-Flachbeutel der Firma Kaiser und Kraft (Folienstärke: 50µm) wurden 7,5 Gewichtsteile Vergleichsbeispiel 1 mit 4,0 Gewichtsteilen Vergleichsbeispiel 2 eingewogen und vermischt. Diese Mischung entspricht einem Molverhältnis: Silan der Formel I: 56% (EtO)₃Si(CH₂)₃S(CH₂)₆S₂(CH₂)₆S(CH₂)₃Si(OEt)₃ und Silan der Formel II: 44% (EtO)₃Si(CH₂)₃S(CH₂)₆S(CH₂)₃Si(OEt)₃.

### Beispiel 11:

In einen PE-Flachbeutel der Firma Kaiser und Kraft (Folienstärke: 50µm) wurden 5,5 Gewichtsteile Vergleichsbeispiel 1 mit 6,5 Gewichtsteilen Vergleichsbeispiel 2 eingewogen und vermischt. Diese Mischung entspricht einem Molverhältnis: Silan der Formel I: 38% (EtO)₃Si(CH₂)₃S(CH₂)₆S₂(CH₂)₆S(CH₂)₃Si(OEt)₃ und Silan der Formel II: 62% (EtO)₃Si(CH₂)₃S(CH₂)₆S(CH₂)₃Si(OEt)₃.

### Beispiel 12:

In einen PE-Flachbeutel der Firma Kaiser und Kraft (Folienstärke: 50µm) wurden 3,0 Gewichtsteile Vergleichsbeispiel 1 mit 9,5 Gewichtsteilen Vergleichsbeispiel 2 eingewogen und vermischt. Diese Mischung entspricht einem Molverhältnis: Silan der Formel I: 19% (EtO)₃Si(CH₂)₃S(CH₂)₆S₂(CH₂)₆S(CH₂)₃Si(OEt)₃ und Silan der Formel II: 81% (EtO)₃Si(CH₂)₃S(CH₂)₆S(CH₂)₃Si(OEt)₃.

### Beispiel 13:

In einen PE-Flachbeutel der Firma Kaiser und Kraft (Folienstärke: 50µm) wurden 4,3 Gewichtsteile Vergleichsbeispiel 3 mit 3,4 Gewichtsteilen Vergleichsbeispiel 2 eingewogen und vermischt. Diese Mischung entspricht einem Molverhältnis: Silan der Formel I: 60% (EtO)₃Si(CH₂)₃S₂(CH₂)₃Si(OEt)₃ und Silan der Formel II: 40% (EtO)₃Si(CH₂)₃S(CH₂)₆S(CH₂)₃Si(OEt)₃.

### Beispiel 14:

In einen PE-Flachbeutel der Firma Kaiser und Kraft (Folienstärke: 50µm) wurden 2,9 Gewichtsteile Vergleichsbeispiel 3 mit 5,1 Gewichtsteilen Vergleichsbeispiel 2 eingewogen und vermischt. Diese Mischung entspricht einem Molverhältnis: Silan der Formel I: 40% (EtO)₃Si(CH₂)₃S₂(CH₂)₃Si(OEt)₃ und Silan der Formel II: 60% (EtO)₃Si(CH₂)₃S(CH₂)₆S(CH₂)₃Si(OEt)₃.

### Beispiel 15: Gummitechnische Untersuchungen

Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks. Die Mischungen 1-4 enthalten alle die gleiche phr-Menge an Silan der Formel I (EtO)₃Si(CH₂)₃S(CH₂)₆S₂(CH₂)₆S(CH₂)₃Si(OEt)₃ und eine zunehmende Menge an Silan der Formel II (EtO)₃Si(CH₂)₃S(CH₂)₆S(CH₂)₃Si(OEt)₃

**Tabelle 1:**

| | Mischung 1 / phr | Mischung 2 / phr Erf. | Mischung 3 / phr Erf. | Mischung 4 / phr Erf. | Mischung 5 / phr |
|---|---|---|---|---|---|
| **1. Stufe** | | | | | |
| NR SMR 10^{a)} | 20,0 | 20,0 | 20,0 | 20,0 | 20,0 |
| Hoch-cis BR^{b)} | 44,0 | 44,0 | 44,0 | 44,0 | 44,0 |
| S-SBR^{c)} | 36,0 | 36,0 | 36,0 | 36,0 | 36,0 |
| Kieselsäure^{d)} | 95,0 | 95,0 | 95,0 | 95,0 | 95,0 |
| TDAE Öl^{e)} | 45,0 | 45,0 | 45,0 | 45,0 | 45,0 |
| 6PPD^{f)} | 2,0 | 2,0 | 2,0 | 2,0 | 2,0 |
| TMQ^{g)} | 2,0 | 2,0 | 2,0 | 2,0 | 2,0 |
| Ozonschutzwachs^{h)} | 2,0 | 2,0 | 2,0 | 2,0 | 2,0 |
| ZnOⁱ⁾ | 2,5 | 2,5 | 2,5 | 2,5 | 2,5 |
| Fettsäure^{j)} | 2,5 | 2,5 | 2,5 | 2,5 | 2,5 |
| Vergleichsbeispiel 1 | 9,94 | | | | |
| Beispiel 1 | | 11,90 | | | |
| Beispiel 2 | | | 15,18 | | |
| Beispiel 3 | | | | 17,79 | |
| Vergleichsbeispiel 2 | | | | | 7,85 |

| **2. Stufe** | | | | | |
|---|---|---|---|---|---|
| Batch Stufe 1 | | | | | |

| **3. Stufe** | | | | | |
|---|---|---|---|---|---|
| Batch Stufe 2 | | | | | |
| DPG-80^{k)} | 2,5 | 2,5 | 2,5 | 2,5 | 2,5 |
| CBS^{l)} | 1,6 | 1,6 | 1,6 | 1,6 | 1,6 |
| Schwefel^{m)} | 2,0 | 2,0 | 2,0 | 2,0 | 2,0 |

**In Tabelle 1 verwendete Substanzen:**
a) NR TSR SMR 10: Naturkautschuk der Firma Wurfbain Nordmann GmbH (TSR = Technically Specified Rubber; SMR = Standard Malaysian Rubber)
b) Hoch-cis BR: Buna CB 24, Lösung polymerisiertes hoch cis-1,4-Polybutadien (Neodym-Katalysator) der Arlanxeo GmbH (cis-1,4-Gehalt min. 96 %, Mooney-Viskosität (ML 1+4/100 °C) 44 ME).
c) S-SBR: SPRINTAN SLR 4601-Schkopau; anionisch polymerisierter Lösungs-Styrol-Butadien-Kautschuk (Organolithiuminitiator) der Firma Trinseo (Mikrostruktur: medium Styrol / hochvinyl; TG - 25°C)
d) Kieselsäure: ULTRASIL® VN 3 GR der Firma Evonik Industries AG (gefällte Kieselsäure, BET-Oberfläche = 175 m²/g).
e) TDAE-ÖI: Vivatec 500 der H&R AG.
f) 6PPD: Vulkanox 4020/LG: *N*-(1,3-dimethylbutyl)-*N'*-phenyl-p-phenylene diamine (6PPD) der Rhein Chemie Rheinau GmbH.
g) TMQ Vulkanox HS/LG: polymeres 2,2,4-trimethyl-1,2-dihydroquinoline (TMQ), der Rhein Chemie Rheinau GmbH.
h) Ozonschutzwachs: Protektor G3108 aus raffinierten Kohlenwasserstoffen (Erstarrungspunkt ≈ 57°C) der Firma Paramelt B.V.
i) ZnO: Zinkoxid ZnO RS RAL 844 C der Firma Arnsperger Chemikalien GmbH.
j) Fettsäure: Fettsäuregemisch (C₁₆ / C₁₈), EDENOR ST1, Firma Caldic Deutschland Chemie B.V.
k) DPG-80: Rhenogran DPG-80: 80 % *N,N'*-Diphenylguanidin (DPG) auf 20 % elastomerem Träger und Dispergiermittel der Rhein Chemie Rheinau GmbH.
l) CBS: Vulkacit CZ/EG-C: *N*-Cyclohexyl-2-benzothiazolsulfenamid der Firma Rhein Chemie Rheinau GmbH.
m) Schwefel: Mahlschwefel 80/90° der Firma Solvay & CPC Barium Strontium GmbH & Co.KG.

Die Mischungen wurden dreistufig in einem 1,5 L Innenmischer (E-Typ) bei einer Batch-Temperatur von 150 °C gemäß der in Tabelle 2 beschriebenen Mischvorschrift hergestellt.

Das allgemeine Verfahren zur Herstellung von Kautschukmischungen und deren Vulkanisate ist in dem Buch: "Rubber Technology Handbook", W. Hofmann, Hanser Verlag 1994 beschrieben.

**Tabelle 2**

| Stufe 1 | |
|---|---|
| Einstellungen | |
| Mischaggregat | Von HF Mixing Group GmbH; Typ GK 1,5 E |
| Füllgrad | 0,66 |
| Drehzahl | 80 min⁻¹ |
| Stempeldruck | 5,5 bar |
| Durchflußtemp. | 80 °C |

| Mischvorgang | |
|---|---|
| 0 bis 0,5 min | Kautschuke |
| 0,5 bis 1,5 min | Gesamte Kieselsäure abzüglich 50 g, Silan oder Silangemisch im Beutel, ZnO, Fettsäure, 6PPD, TMQ, Ozonschutzwachs |
| 1,5 bis 2,5 min | Drehzahl auf 35 UPM reduzieren, TDAE-ÖI mit restlichen 50 g Kieselsäure vermischen und das Gemisch in den Kneter geben |
| 2,5 min | Lüften |
| 2,5 bis 7,0 min | Mischen bei 150 °C, Temperatur über Drehzahlvariation einstellen |
| 7,0 min | Batch auswerfen und auf Labormischwalzwerk 45 s ein Fell bilden |
| | (Laborwalzwerk: Durchmesser 250 mm, Länge 190 mm, Walzenspalt 4 mm, Durchflußtemperatur 60 °C) |
| | 24 h Lagerung bei Raumtemperatur |

| Stufe 2 | |
|---|---|
| Einstellungen | |
| Mischaggregat | wie in Stufe 1 bis auf |
| Füllgrad | 0,63 |
| Drehzahl | 95 min-¹ |
| Durchflußtemp. | 90 °C |

| Mischvorgang | |
|---|---|
| 0 bis 2,0 min | Batch Stufe 1 aufbrechen |
| 2,0 bis 3,0 min | Mischen bei 150 °C, Temperatur ggfs. über Drehzahlvariation einstellen |
| 3,0 min | Batch auswerfen und auf Labormischwalzwerk 45 s ein Fell bilden |
| | (Laborwalzwerk: Durchmesser 250 mm, Länge 190 mm, Walzenspalt 4 mm, Durchflußtemperatur 60 °C) |
| | 24 h Lagerung bei Raumtemperatur |

| Stufe 3 | |
|---|---|
| Einstellungen | |
| Mischaggregat | wie in Stufe 1 bis auf |
| Füllgrad | 0,60 |
| Drehzahl | 55 min⁻¹ |
| Durchflußtemp. | 50 °C |

| Mischvorgang | |
|---|---|
| 0 bis 0,5 min | Batch Stufe 3 aufbrechen |
| 0,5 bis 2,0 min | Beschleuniger und Schwefel, mischen bei 95 °C, Temperatur ggfs. über Drehzahlvariation einstellen |
| 2,0 min | Batch auswerfen und auf Labormischwalzwerk 20 s ein Fell bilden, drei Mal links, drei Mal rechts einschneiden, 3 mal stürzten |
| | (Laborwalzwerk: Durchmesser 250 mm, Länge 190 mm, Walzenspalt 4 mm, Durchflußtemperatur 80 °C) |

Die Vulkanisation erfolgte bei einer Temperatur von 160 °C in einer typischen Vulkanisationspresse mit einem Haltedruck von 120 bar nach t_{95%}. Die t_{95%} Zeit wurde mittels Moving Die Rheometer (rotorloses Vulkameter) nach ISO 6502 (Absatz 3.2 "rotorless curemeter") bei 160 °C bestimmt.

Die gummitechnische Prüfung erfolgte gemäß den in Tabelle 3 angegebenen Prüfmethoden.

**Tabelle 3**

| Physikalische Testung | Norm/Bedingungen |
|---|---|
| Mooney Viskosität ML 1+4 bei 100°C | ISO 289-1 |
| *Mooney Viskosität* / *ME* | |
| Rubber Process Analyzer (RPA) bei 165°C, 1,67 Hz, 3° = 42 % | ISO 6502, Absatz 3.2 "rotorless curemeter" |
| *Mmin* / *dNm* | |
| *Mmax* / *dNm* | |
| Δ *Drehmoment (Mₘₐₓ-Mₘₐₙ)* / *dNm* | |
| Zugversuch am Stab bei 23°C | ISO 37 |
| *Zugfestigkeit* / *MPa* | |
| *Modul 300%* / *MPa* | |
| Abriebwiderstand, ermittelt mit einem Gerät mit rotierender Zylindertrommel, 10 N | ISO 4649 |
| *Volumenverlust* / *mm³* | |
| Ball Rebound 70°C | ISO 8307 |
| *Rückprallelastizität* / % | Fallhöhe 500 mm, Stahlkugel d = 19 mm, 28 g |
| Viskoelastische Eigenschaften des Vulkanisats bei 60°C | Rubber Process Analyzer RPA 2000 (Alpha Technologies), Strain Sweep, 1,7 Hz, 0,28% - 42% Dehnung; |
| *Maximaler Verlustfaktor tan δ* | sh."Operators Manual RPA 2000" von Alpha Technologies, February 1997 |
| Viskoelastische Eigenschaften bei 0°C und 60°C | ISO 4664-1 |
| *Komplexer Modul E** | 16 Hz, 50 N Vorkraft und 25 N Amplitudenkraft, 5 min Temperierzeit, Meßwertaufnahme nach 30 s Prüfzeit |
| *Verlustfaktor tan δ* | |

In der Tabelle 4 sind die gummitechnischen Daten für die Rohmischungen und Vulkanisate angegeben.

**Tabelle 4**

| | Mischung 1 | Mischung 2 Erf. | Mischung 3 Erf. | Mischung 4 Erf. | Mischung 5 |
|---|---|---|---|---|---|
| Rohmischungsergebnisse: | | | | | |
| Mooney Viskosität ML 1+4 bei 100°C | | | | | |
| *Mooney Viskosität* / *ME* | | | | | |
| *1. Stufe* | 47 | 43 | 35 | 31 | 54 |
| *2. Stufe* | 41 | 37 | 31 | 27 | 46 |
| *3. Stufe* | 32 | 29 | 26 | 22 | 34 |
| Rubber Process Analyzer (RPA) 160 °C, 1,67 Hz, 3° = 42 % | | | | | |
| *Mₘᵢₙ*/*dNm* | 3,8 | 3,6 | 3,1 | 2,7 | 3,9 |
| *Mₘₐₓ*/*dNm* | 35,9 | 41,9 | 44,5 | 46,9 | 34,0 |
| Δ *Drehmoment (Mₘₐₓ-Mₘᵢₙ)* / *dNm* | 32,1 | 38,3 | 41,4 | 44,2 | 30,1 |
| Vulkanisatergebnisse: | | | | | |
| Zugversuch am Stab bei 23°C | | | | | |
| *Zugfestigkeit* / *MPa* | 12,9 | 14,4 | 14,6 | 14,1 | 14,5 |
| *Modul 300%* /*MPa* | 5,0 | 5,5 | 6,4 | 6,7 | 3,1 |
| Abriebwiderstand | | | | | |
| *Volumenverlust* / *mm³* | 100 | 97 | 72 | 78 | 213 |
| Ball Rebound bei 70°C | | | | | |
| *Rückprallelastizität* / % | 60,6 | 61,8 | 63,1 | 65,7 | 57,5 |
| Viskoelastische Eigenschaften, 60°C, Rubber Process Analyzer (RPA), Strain Sweep, 1,7 Hz, 0,28% - 42% Dehnung | | | | | |
| *Maximaler Verlustfaktor tan δ* / - | 0,205 | 0,195 | 0,179 | 0,167 | 0,250 |
| Viskoelastische Eigenschaften bei 60°C, 16 Hz, 50 N Vorkraft, 25 N Ampl.kraft | | | | | |
| *E* 0° C* | 9,0 | 10,7 | 14,8 | 17,7 | 9,0 |
| *E* 60° C* | 6,1 | 6,7 | 7,3 | 8,4 | 5,7 |
| *tan δ* | 0,142 | 0,134 | 0,119 | 0,116 | 0,169 |

Gegenüber den Vergleichsmischungen zeichnen sich die erfindungsgemäßen Mischungen durch eine verbesserte Verarbeitung (Mooney Viskosität) in allen drei Mischungsstufen aus. Dies wird durch geringer Mₘᵢₙ Werte bestätigt. In den erfindungsgemäßen Mischungen werden höhere Vernetzungsausbeuten (Δ Drehmoment (Mₘₐₓ-Mₘᵢₙ)) erhalten. Ferner führen die erfindungsgemäßen Silanmischungen zu Vorteilen in der Verstärkung (Modul 300%), dem Abriebswiderstand, im Rollwiderstand (Rückprallelastizität, tan δ) sowie in der dynamischen Steifigkeit (E* bei 0°C und 60°C).

### Beispiel 16: Gummitechnische Untersuchungen

Die für die Kautschukmischungen verwendete Rezeptur ist in der folgenden Tabelle 5 angegeben. Dabei bedeutet die Einheit phr Gewichtsanteile, bezogen auf 100 Teile des eingesetzten Rohkautschuks. Die Mischungen 6-8 enthalten alle die gleiche phr-Menge an Silan der Formel I (EtO)₃Si(CH₂)₃S(CH₂)₆S₂(CH₂)₆S(CH₂)₃Si(OEt)₃ und eine zunehmende Menge an Silan der Formel II (EtO)₃Si(CH₂)₃S(CH₂)₆S(CH₂)₃Si(OEt)₃.

**Tabelle 5:**

| | Mischung 6 / phr | Mischung 7 / phr Erf. | Mischung 8 / phr Erf. |
|---|---|---|---|
| **1. Stufe** | | | |
| NR^{a)} | 10,0 | 10,0 | 10,0 |
| BR^{b)} | 18,0 | 18,0 | 18,0 |
| S-SBR^{c)} | 72,0 | 72,0 | 72,0 |
| Kieselsäure^{d)} | 95,0 | 95,0 | 95,0 |
| TDAE Öl^{e)} | 35,0 | 35,0 | 35,0 |
| 6PPD^{f)} | 2,0 | 2,0 | 2,0 |
| Ozonschutzwachs | 2,0 | 2,0 | 2,0 |
| Zinkoxid | 2,5 | 2,5 | 2,5 |
| Stearinsäure | 2,5 | 2,5 | 2,5 |
| Vergleichsbeispiel 1 | 6,8 | | |
| Beispiel 8 | | 10,1 | |
| Beispiel 9 | | | 11,2 |

| **2. Stufe** | | | |
|---|---|---|---|
| Batch Stufe 1 | | | |

| **3. Stufe** | | | |
|---|---|---|---|
| Batch Stufe 2 | | | |
| DPG^{g)} | 2,0 | 2,0 | 2,0 |
| CBS^{h)} | 2,0 | 2,0 | 2,0 |
| Schwefelⁱ⁾ | 2,0 | 2,0 | 2,0 |

**In Tabelle 5 verwendete Substanzen:**
a) NR TSR: Naturkautschuk (TSR = Technically Specified Rubber).
b) Europrene Neocis BR 40, Fa. Polimeri.
c) S-SBR: Sprintan® SLR-4601, Fa. Trinseo.
d) Kieselsäure: ULTRASIL® VN 3 GR der Firma Evonik Industries AG (gefällte Kieselsäure, BET-Oberfläche = 175 m²/g).
e) TDAE-ÖI: treated distillate aromatic extract
f) 6PPD: *N*-(1,3-dimethylbutyl)-*N'*-phenyl-p-phenylene diamine (6PPD).
g) DPG: *N,N'*-Diphenylguanidin (DPG).
h) CBS: *N*-Cyclohexyl-2-benzothiazolsulfenamid.
i) Schwefel: Mahlschwefel.

Die Mischungsherstellung erfolgte unter in der Kautschukindustrie üblichen Verfahren in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. In der zweiten Stufe wird die Mischung aus Stufe 1 noch einmal durchmischt, es wird ein sogenannter Remill durchgeführt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde. Aus sämtlichen Mischungen wurden Prüfkörper durch Vulkanisation nach t95 (gemessen am Moving Die Rheometer gemäß ASTM D 5289-12/ ISO 6502) unter Druck bei 160 °C hergestellt.

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgte gemäß der in Tabelle 6 angegebenen Prüfmethode. Die Ergebnisse der gummitechnischen Prüfung sind in Tabelle 7 angegeben.

**Tabelle 6:**

| Physikalische Testung | Norm/Bedingungen |
|---|---|
| Moving Die Rheometer (rotorloses Vulkameter) bei 160°C: | ASTM D5289 und ISO 6502 |
| *Vernetzungsgeschwindigkeit zwischen 30% und 90% Umsatz k30*/*90* / *min⁻¹* | |

**Tabelle 7:**

| | Mischung 6 | Mischung 7 Erf. | Mischung 8 Erf. |
|---|---|---|---|
| Rohm ischu ngsergebnisse: | | | |
| Moving Die Rheometer (MDR) bei 160°C | | | |
| *k30*/*90* / *min⁻¹* | 0,18 | 0,35 | 0,34 |

Die erfindungsgemäßen Beispiele sind durch ein verbessertes Verarbeitungsverhalten im Vergleich zum Vergleichsbeispiel gekennzeichnet, was sich in einer höheren Vernetzungsgeschwindigkeit zwischen 30% und 90% Umsatz k30/90 zeigt. Dadurch wird mit den erfindungsgemäßen Beispielen eine verbesserte Lösung des Zielkonflikts der Verarbeitungssicherheit und der Ausvulkanisation realisiert.

### Beispiel 17: Gummitechnische Untersuchungen

Die für die Kautschukmischungen verwendete Rezeptur ist in der folgenden Tabelle 8 angegeben. Dabei bedeutet die Einheit phr Gewichtsanteile, bezogen auf 100 Teile des eingesetzten Rohkautschuks. Die Mischungen enthalten jeweils Gemische der Silane der Formel I und des Silans der Formel II in den molaren Verhältnissen 60:40; 40:60; 20:80.

**Tabelle 8:**

| | Mischung 9 / phr Erf. | Mischung 10 / phr Erf. | Mischung 11 / phr Erf. | Mischung 12 / phr | Mischung 13 / phr | Mischung 14 / phr | Mischung 15 / phr Erf. | Mischung 16 / phr Erf. |
|---|---|---|---|---|---|---|---|---|
| **1. Stufe** | | | | | | | | |
| NR^{a)} | 10,0 | 10,0 | 10,0 | 10,0 | 10,0 | 10,0 | 10,0 | 10,0 |
| BR^{b)} | 18,0 | 18,0 | 18,0 | 18,0 | 18,0 | 18,0 | 18,0 | 18,0 |
| S-SBR^{c)} | 72,0 | 72,0 | 72,0 | 72,0 | 72,0 | 72,0 | 72,0 | 72,0 |
| Kieselsäure^{d)} | 95,0 | 95,0 | 95,0 | 95,0 | 95,0 | 95,0 | 95,0 | 95,0 |
| TDAE Öl^{e)} | 50,0 | 50,0 | 50,0 | 50,0 | 50,0 | 50,0 | 50,0 | 50,0 |
| 6PPD^{f)} | 2,0 | 2,0 | 2,0 | 2,0 | 2,0 | 2,0 | 2,0 | 2,0 |
| Ozonschutzwachs | 2,0 | 2,0 | 2,0 | 2,0 | 2,0 | 2,0 | 2,0 | 2,0 |
| Zinkoxid | 2,5 | 2,5 | 2,5 | 2,5 | 2,5 | 2,5 | 2,5 | 2,5 |
| Stearinsäure | 2,5 | 2,5 | 2,5 | 2,5 | 2,5 | 2,5 | 2,5 | 2,5 |
| Beispiel 10 | 10,9 | | | | | | | |
| Beispiel 11 | | 11,4 | | | | | | |
| Beispiel 12 | | | 11,9 | | | | | |
| Vergleichsbeispiel 5 | | | | 6,6 | | | | |
| Vergleichsbeispiel 6 | | | | | 6,4 | | | |
| Vergleichsbeispiel 7 | | | | | | 6,2 | | |
| Beispiel 13 | | | | | | | 7,3 | |
| Beispiel 14 | | | | | | | | 7,6 |

| **2. Stufe** | | | | | | | | |
|---|---|---|---|---|---|---|---|---|
| Batch Stufe 1 | | | | | | | | |

| **3. Stufe** | | | | | | | | |
|---|---|---|---|---|---|---|---|---|
| Batch Stufe 2 | | | | | | | | |
| DPG^{g)} | 2,0 | 2,0 | 2,0 | 2,0 | 2,0 | 2,0 | 2,0 | 2,0 |
| CBS^{h)} | 2,0 | 2,0 | 2,0 | 2,0 | 2,0 | 2,0 | 2,0 | 2,0 |
| Schwefelⁱ⁾ | 2,0 | 2,0 | 2,0 | 2,0 | 2,0 | 2,0 | 2,0 | 2,0 |

**In Tabelle 8 verwendete Substanzen:**
a) NR TSR: Naturkautschuk (TSR = Technically Specified Rubber).
b) Europrene Neocis BR 40, Fa. Polimeri.
c) S-SBR: Sprintan® SLR-4601, Fa. Trinseo.
d) Kieselsäure: ULTRASIL® VN 3 GR der Firma Evonik Industries AG (gefällte Kieselsäure, BET-Oberfläche = 175 m²/g).
e) TDAE-ÖI: Vivatec 500 der H&R AG.
f) 6PPD: *N*-(1,3-dimethylbutyl)-*N'*-phenyl-p-phenylene diamine (6PPD).
h) DPG: *N,N'*-Diphenylguanidin (DPG).
i) CBS: *N*-Cyclohexyl-2-benzothiazolsulfenamid.
j) Schwefel: Mahlschwefel.

Die Mischungsherstellung erfolgte unter in der Kautschukindustrie üblichen Verfahren in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. In der zweiten Stufe wurde die Mischung aus Stufe 1 noch einmal durchmischt, es wurde ein sogenannter Remill durchgeführt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde. Aus sämtlichen Mischungen wurden Prüfkörper durch Vulkanisation nach t95 (gemessen am Moving Die Rheometer gemäß ASTM D 5289-12/ ISO 6502) unter Druck bei 160°C hergestellt.

Das allgemeine Verfahren zur Herstellung von Kautschukmischungen und deren Vulkanisate ist in "Rubber Technology Handbook", W. Hofmann, Hanser Verlag 1994 beschrieben.

Die gummitechnische Prüfung erfolgte gemäß der in Tabelle 6 angegebenen Prüfmethode. Die Ergebnisse der gummitechnischen Prüfung sind in Tabelle 9 angegeben.

**Tabelle 9:**

| | Mischung 9 / phr Erf. | Mischung 10 / phr Erf. | Mischung 11 / phr Erf. | Mischung 12 / phr | Mischung 13 / phr | Mischung 14 / phr | Mischung 15 / phr Erf. | Mischung 16 / phr Erf. |
|---|---|---|---|---|---|---|---|---|
| Rohmischungsergebnisse: | | | | | | | | |
| Moving Die Rheometer (MDR) bei 160°C | | | | | | | | |
| *k30*/*90*/*min⁻¹* | 0,35 | 0,36 | 0,38 | 0,20 | 0,20 | 0,21 | 0,25 | 0,30 |

Die erfindungsgemäßen Beispiele sind durch ein verbessertes Verarbeitungsverhalten im Vergleich zum Vergleichsbeispiel gekennzeichnet, was sich in einer höheren Vernetzungsgeschwindigkeit zwischen 30% und 90% Umsatz k30/90 zeigt. Dadurch wird mit den erfindungsgemäßen Beispielen eine verbesserte Lösung des Zielkonflikts der Verarbeitungssicherheit und der Ausvulkanisation realisiert.

## Patentansprüche

1. Silanmischung, enthaltend ein Silan der Formel I
(R¹)_{y}(R²)_{3-y}Si-R³-(S-R⁴)ₙ-Sₓ(R⁴-S)ₙ-R³-Si(R¹)_{y}(R²)_{3-y} (I),
und ein Silan der Formel II
(R¹)_{y}(R²)_{3-y}Si-R³-(S-R⁴)_{z}-S-R³-Si(R¹)_{y}(R²)_{3-y} (II),
wobei R¹ gleich oder verschieden sind und C1-C10-Alkoxygruppen, Phenoxygruppen, C4-C10-Cycloalkoxygruppen oder Alkylpolyethergruppen -O-(R¹-O)ᵣ-R⁶ sind, mit R⁵ gleich oder verschieden sind und eine verzweigte oder unverzweigte, gesättigte oder ungesättigte, aliphatische, aromatische oder gemischt aliphatische/aromatische zweibindige C1-C30-Kohlenwasserstoffgruppe sind, r eine ganze Zahl von 1 bis 30 ist, und R⁶ eine unsubstituierte oder substituierte, verzweigte oder unverzweigte einbindige Alkyl-, Alkenyl-, Aryl- oder Aralkylgruppen ist,
R² gleich oder verschieden sind und C6-C20-Arylgruppen, C1-C10-Alkylgruppen, C2-C20-Alkenylgruppen, C7-C20-Aralkylgruppen oder Halogen sind,
R³ gleich oder verschieden sind und verzweigte oder unverzweigte, gesättigte oder ungesättigte, aliphatische, aromatische oder gemischt aliphatische/aromatische zweibindige C1-C30-Kohlenwasserstoffgruppen sind,
R⁴ gleich oder verschieden sind und verzweigte oder unverzweigte, gesättigte oder ungesättigte, aliphatische, aromatische oder gemischt aliphatische/aromatische zweibindige C1-C30- Kohlenwasserstoffgruppen sind,
und x eine Zahl von 2 bis 10 ist,
n gleich sind und 0, 1, 2 oder 3 sind, y gleich oder verschieden sind und 1, 2 oder 3 sind, z ist 1, 2 oder 3,
und das Molverhältnis an Silan der Formel I zu Silan der Formel II 19:81 - 81:19 beträgt.

2. Silanmischung gemäß Anspruch 1, **dadurch gekennzeichnet, dass** n 0 oder 1 ist und z =1 ist.

3. Silanmischung gemäß Anspruch 1, **dadurch gekennzeichnet, dass** n = 1 und z = 1 sind.

4. Silanmischung gemäß Anspruch 1, **dadurch gekennzeichnet, dass** x = 2 ist.

5. Silanmischung gemäß Anspruch 3, **dadurch gekennzeichnet, dass** das Silan der Formel I (EtO)₃Si-(CH₂)₃-S-(CH₂)₆-S₂-(CH₂)₆-S-(CH₂)₃-Si(OEt)₃ und das Silan der Formel II (EtO)₃Si-(CH₂)₃-S-(CH₂)₆-S-(CH₂)₃-Si(OEt)₃ ist.

6. Silanmischung gemäß Anspruch 2, **dadurch gekennzeichnet, dass** das Silan der Formel I (EtO)₃Si-(CH₂)₃-S₂-(CH₂)₃-Si(OEt)₃ und das Silan der Formel II (EtO)₃Si-(CH₂)₃-S-(CH₂)₆-S-(CH₂)₃-Si(OEt)₃ ist.

7. Silanmischung gemäß Anspruch 1, **dadurch gekennzeichnet, dass** das Molverhältnis an Silan der Formel I zu Silan der Formel II 20:80 - 65:35 beträgt.

8. Verfahren zur Herstellung von Silanmischung gemäß Anspruch 1, **dadurch gekennzeichnet, dass** man das Silan der Formel I
(R¹)_{y}(R²)_{3-y}Si-R³-(S-R⁴)ₙ-Sₓ-(R⁴-S)ₙ-R³-Si(R¹)_{y}(R²)_{3-y} (I),
und ein Silan der Formel II
(R¹)_{y}(R²)_{3-y}Si-R³-(S-R⁴)_{z}-S-R³-Si(R¹)_{y}(R²)_{3-y} (II),
wobei R¹, R², R³, R⁴, n, x, y und z die oben genannte Bedeutung haben,
in einem Molverhältnis von 81:19 - 19:81 mischt.

9. Verfahren zur Herstellung von Silanmischung gemäß Anspruch 8, **dadurch gekennzeichnet, dass** n = 0 oder 1 und z = 1 sind.

10. Verfahren zur Herstellung von Silanmischung gemäß Anspruch 8, **dadurch gekennzeichnet, dass** n = 1 und z = 1 sind.

11. Verfahren zur Herstellung von Silanmischung gemäß Anspruch 8, **dadurch gekennzeichnet, dass** das Molverhältnis an Silan der Formel I zu Silan der Formel II 50:50 - 70:30 beträgt.

12. Verfahren zur Herstellung von Silanmischung gemäß Anspruch 9, **dadurch gekennzeichnet, dass** das Silan der Formel I (EtO)₃Si-(CH₂)₃-S-(CH₂)₆-S₂-(CH₂)₆-S-(CH₂)₃-Si(OEt)₃ oder (EtO)₃Si-(CH₂)₃-S₂-(CH₂)₃-Si(OEt)₃
und das Silan der Formel II
(EtO)₃Si-(CH₂)₃-S-(CH₂)₆-S-(CH₂)₃-Si(OEt)₃ ist.

13. Verfahren zur Herstellung von Silanmischung gemäß Anspruch 3, **dadurch gekennzeichnet, dass** man in einem ersten Schritt ein Mercaptosilan der Formel III
(R¹)_{y}(R²)_{3-y}Si-R³-SH (III)
mit einer Halogenverbindung der Formel IV
Hal-R⁴-Hal (IV),
wobei R¹, R², R³ und R⁴ die oben genannte Bedeutungen haben und Hal gleich F, Cl, Br oder I ist,
in einem Molverhältnis der Formel (III) zur Formel (IV) von 34:66 - 64:36 umsetzt
und in einem zweiten Schritt das Produkt aus dem ersten Verfahrensschritt mit Natriumpolysulfid der Formel (V)
Na2Sx (V)
wobei x die oben genannte Bedeutung hat,
umsetzt.

14. Verfahren zur Herstellung von Silanmischung gemäß Anspruch 13, **dadurch gekennzeichnet, dass** das Mercaptosilan der Formel III
(EtO)₃Si-(CH₂)₃-SH
die Halogenverbindung der Formel IV
Cl-(CH₂)₆-Cl
und das Natriumpolysulfid der Formel V
Na2S2 ist.

## Claims

1. Silane mixture comprising a silane of the formula I
(R¹)_{y}(R²)_{3-y}Si-R³-(S-R⁴)ₙ-Sₓ-(R⁴-S)ₙ-R³-Si(R¹)_{y}(R²)_{3-y} (I)
and a silane of the formula II
(R¹)_{y}(R²)_{3-y}Si-R³-(S-R⁴)_{z}-S-R³-Si(R¹)_{y}(R²)_{3-y} (II)
where R¹ are the same or different and are C1-C10-alkoxy groups, phenoxy groups, C4-C10-cycloalkoxy groups or alkyl polyether groups -O-(R⁵-O)ᵣ-R⁶ where R⁵ are the same or different and are a branched or unbranched, saturated or unsaturated, aliphatic, aromatic or mixed aliphatic/aromatic divalent C1-C30 hydrocarbon group, r is an integer from 1 to 30, and R⁶ is an unsubstituted or substituted, branched or unbranched monovalent alkyl, alkenyl, aryl or aralkyl group,
R² are the same or different and are C6-C20-aryl groups, C1-C10-alkyl groups, C2-C20-alkenyl groups, C7-C20-aralkyl groups or halogen,
R³ are the same or different and are branched or unbranched, saturated or unsaturated, aliphatic, aromatic or mixed aliphatic/aromatic divalent C1-C30 hydrocarbon groups,
R⁴ are the same or different and are branched or unbranched, saturated or unsaturated, aliphatic, aromatic or mixed aliphatic/aromatic divalent C1-C30 hydrocarbon groups,
and x is a number from 2 to 10,
n are the same and are 0, 1, 2 or 3, y are the same or different and are 1, 2 or 3, z is 1, 2 or 3,
and the molar ratio of silane of the formula I to silane of the formula II is 19:81-81:19.

2. Silane mixture according to Claim 1, **characterized in that** n is 0 or 1 and z = 1.

3. Silane mixture according to Claim 1, **characterized in that** n = 1 and z = 1.

4. Silane mixture according to Claim 1, **characterized in that** x = 2.

5. Silane mixture according to Claim 3, **characterized in that** the silane of the formula I is (EtO)₃Si-(CH₂)₃-S-(CH₂)₆-S₂-(CH₂)₆-S-(CH₂)₃-Si(OEt)₃ and the silane of the formula II is (EtO)₃Si-(CH₂)₃-S-(CH₂)₆-S-(CH₂)₃-Si(OEt)₃.

6. Silane mixture according to Claim 2, **characterized in that** the silane of the formula I is (EtO)₃Si-(CH₂)₃-S₂-(CH₂)₃-Si(OEt)₃ and the silane of the formula II is (EtO)₃Si-(CH₂)₃-S-(CH₂)₆-S-(CH₂)₃-Si(OEt)₃.

7. Silane mixture according to Claim 1, **characterized in that** the molar ratio of silane of the formula I to silane of the formula II is 20:80-65:35.

8. Process for preparing silane mixture according to Claim 1, **characterized in that** the silane of the formula I
(R¹)_{y}(R²)_{3-y}Si-R³-(S-R⁴)ₙ-Sₓ-(R⁴-S)ₙ-R³-Si(R¹)_{y}(R²)_{3-y} (I)
and a silane of the formula II
(R¹)_{y}(R²)_{3-y}Si-R³-(S-R⁴)_{z}-S-R³-Si(R¹)_{y}(R²)_{3-y} (II)
where R¹, R², R³, R⁴, n, x, y and z have the definition given above
are mixed in a molar ratio of 81:19-19:81.

9. Process for preparing silane mixture according to Claim 8, **characterized in that** n = 0 or 1 and z = 1.

10. Process for preparing silane mixture according to Claim 8, **characterized in that** n = 1 and z = 1.

11. Process for preparing silane mixture according to Claim 8, **characterized in that** the molar ratio of silane of the formula I to silane of the formula II is 50:50-70:30.

12. Process for preparing silane mixture according to Claim 9, **characterized in that** the silane of the formula I is (EtO)₃Si-(CH₂)₃-S-(CH₂)₆-S₂-(CH₂)₆-S-(CH₂)₃-Si(OEt)₃ or (EtO)₃Si-(CH₂)₃-S₂-(CH₂)₃-Si(OEt)₃ and the silane of the formula II is (EtO)₃Si-(CH₂)₃-S-(CH₂)₆-S-(CH₂)₃-Si(OEt)₃.

13. Process for preparing silane mixture according to Claim 3, **characterized in that** in a first step a mercaptosilane of the formula III
(R¹)_{y}(R²)_{3-y}Si-R³-SH (III)
is reacted with a halogen compound of the formula IV
Hal-R⁴-Hal (IV)
where R¹, R², R³ and R⁴ have the definitions given above and Hal is F, Cl, Br or I
in a molar ratio of the formula (III) to the formula (IV) of 34:66-64:36
and in a second step the product from the first process step is reacted with sodium polysulfide of the formula (V)
Na₂Sₓ (V)
where x is as defined above.

14. Process for preparing silane mixture according to Claim 13, **characterized in that** the mercaptosilane of the formula III is
(EtO)3Si-(CH₂)₃-SH
the halogen compound of the formula IV is Cl-(CH₂)₆-Cl
and the sodium polysulfide of the formula V is Na₂S₂.

## Revendications

1. Mélange de silanes, contenant un silane de la formule I :
(R¹)_{y}(R²)_{3-y}Si-R³-(S-R⁴)ₙ-Sₓ-(R⁴-S)ₙ-R³-Si(R¹)_{y}(R²)_{3-y} (I)
et un silane de la formule II :
(R¹)_{y}(R²)_{3-y}Si-R³-(S-R⁴)_{z}-S-R³-Si(R¹)_{y}(R²)_{3-y} (II)
dans lesquelles les R¹ sont identiques ou différents, et représentent des groupes alcoxy en C1-C10, des groupes phénoxy, des groupes cycloalcoxy en C4-C10 ou des groupes alkylpolyéther -O-(R⁵-O)ᵣ-R⁶, les R⁵ étant identiques ou différents, et représentant un groupe hydrocarboné en C1-C30 bivalent ramifié ou non ramifié, saturé ou insaturé, aliphatique, aromatique ou aliphatique/aromatique mixte, r représentant un nombre entier de 1 à 30, et R⁶ représentant un groupe alkyle, alcényle, aryle ou aralkyle monovalent non substitué ou substitué, ramifié ou non ramifié,
les R² sont identiques ou différents, et représentent des groupes aryle en C6-C20, des groupes alkyle en C1-C10, des groupes alcényle en C2-C20, des groupes aralkyle en C7-C20 ou un halogène,
les R³ sont identiques ou différents, et représentent des groupes hydrocarbonés en C1-C30 bivalents ramifiés ou non ramifiés, saturés ou insaturés, aliphatiques, aromatiques ou aliphatiques/aromatiques mixtes,
les R⁴ sont identiques ou différents, et représentent des groupes hydrocarbonés en C1-C30 bivalents ramifiés ou non ramifiés, saturés ou insaturés, aliphatiques, aromatiques ou aliphatiques/aromatiques mixtes,
et x représente un nombre de 2 à 10,
les n sont identiques, et représentent 0, 1, 2 ou 3, les y sont identiques ou différents, et représentent 1, 2 ou 3, z représente 1, 2 ou 3,
le rapport molaire entre le silane de la formule I et le silane de la formule II étant de 19:81 à 81:19.

2. Mélange de silanes selon la revendication 1, **caractérisé en ce que** n représente 0 ou 1, et z = 1.

3. Mélange de silanes selon la revendication 1, **caractérisé en ce que** n = 1 et z = 1.

4. Mélange de silanes selon la revendication 1, **caractérisé en ce que** x = 2.

5. Mélange de silanes selon la revendication 3, **caractérisé en ce que** le silane de la formule I est (EtO)₃Si-(CH₂)₃-S-(CH₂)₆-S₂-(CH₂)₆-S-(CH₂)₃-Si(OEt)₃ et le silane de la formule II est (EtO)₃Si-(CH₂)₃-S-(CH₂)₆-S-(CH₂)₃-Si(OEt)₃.

6. Mélange de silanes selon la revendication 2, **caractérisé en ce que** le silane de la formule I est (EtO)₃Si-(CH₂)₃-S₂-(CH₂)₃-Si(OEt)₃ et le silane de la formule II est (EtO)₃Si-(CH₂)₃-S-(CH₂)₆-S-(CH₂)₃-Si(OEt)₃.

7. Mélange de silanes selon la revendication 1, **caractérisé en ce que** le rapport molaire entre le silane de la formule I et le silane de la formule II est de 20:80 à 65:35.

8. Procédé de fabrication d'un mélange de silanes selon la revendication 1, **caractérisé en ce que** le silane de la formule I :
(R¹)_{y}(R²)_{3-y}Si-R³-(S-R⁴)ₙ-Sₓ-(R⁴-S)ₙ-R³-Si(R¹)_{y}(R²)_{3-y} (I)
et un silane de la formule II :
(R¹)_{y}(R²)_{3-y}Si-R³-(S-R⁴)_{z}-S-R³-Si(R¹)_{y}(R²)_{3-y} (II)
dans lesquelles R¹, R², R³, R⁴, n, x, y et z ont la signification indiquée précédemment,
sont mélangés en un rapport molaire de 81:19 à 19:81.

9. Procédé de fabrication d'un mélange de silanes selon la revendication 8, **caractérisé en ce que** n = 0 ou 1 et z = 1.

10. Procédé de fabrication d'un mélange de silanes selon la revendication 8, **caractérisé en ce que** n = 1 et z = 1.

11. Procédé de fabrication d'un mélange de silanes selon la revendication 8, **caractérisé en ce que** le rapport molaire entre le silane de la formule I et le silane de la formule II est de 50:50 à 70:30.

12. Procédé de fabrication d'un mélange de silanes selon la revendication 9, **caractérisé en ce que** le silane de la formule I est (EtO)₃Si-(CH₂)₃-S-(CH₂)₆-S₂-(CH₂)₆-S-(CH₂)₃-Si(OEt)₃ ou (EtO)₃Si-(CH₂)₃-S₂-(CH₂)₃-Si(OEt)₃,
et le silane de la formule II est (EtO)₃Si-(CH₂)₃-S-(CH₂)₆-S-(CH₂)₃-Si(OEt)₃.

13. Procédé de fabrication d'un mélange de silanes selon la revendication 3, **caractérisé en ce que**, lors d'une première étape, un mercaptosilane de la formule III :
(R¹)_{y}(R²)_{3-y}Si-R³-SH (III)
est mis en réaction avec un composé halogéné de la formule IV :
Hal-R⁴-Hal (IV)
dans lesquelles R¹, R², R³ et R⁴ ont les significations indiquées précédemment, et Hal représente F, Cl, Br ou I,
en un rapport molaire entre la formule (III) et la formule (IV) de 34:66 à 64:36,
et, lors d'une deuxième étape, le produit de la première étape de procédé est mis en réaction avec un polysulfure de sodium de la formule (V) :
Na₂Sₓ (V)
dans laquelle x a la signification indiquée précédemment.

14. Procédé de fabrication d'un mélange de silanes selon la revendication 13, **caractérisé en ce que** le mercaptosilane de la formule III est :
(EtO)₃Si-(CH₂)₃-SH,
le composé halogéné de la formule IV est : Cl-(CH₂)₆-Cl
et le polysulfure de sodium de la formule V est : Na₂S₂.
